# EUROPEAN PATENT APPLICATION

(11) **EP 4 451 076 A1**
(43) Date of publication of application: **23.10.2024**
(21) Application number: 23743275.2
(22) Date of filing: 18.01.2023
(51) Int. Cl.: G05B 19/418, G06Q 50/04

(54) **PRODUCTION ASSISTANCE DEVICE, METHOD, AND PROGRAM**

(30) Priority: 24.01.2022 JP 2022008924
(71) Applicant: NTT Communications Corporation, Tokyo 100-8019 (JP)
(72) Inventor: HORIKOSHI, Takashi, Tokyo 100-8019 (JP); SAKAINO, Akira, Tokyo 100-8019 (JP)
(74) Representative: Nederlandsch Octrooibureau
(86) International application number: PCT/JP2023/001314
(87) International publication number: WO 2023/140281

(57) **Abstract**

According to an aspect of the present invention, in assisting a production operation of a product by a production facility, prediction information of an electric power charge and a CO2 emission amount per unit electric power amount of each date and time is acquired for each of a plurality of electric power supply sources assumed to be used for the production operation, and information for specifying a production condition of the product from a terminal of a production requester is acquired. At least first production plan information prioritizing reduction of a CO2 emission amount is generated based on the acquired prediction information and information for specifying the production condition, and the generated first production plan information is output.

## Description

### FIELD

One aspect of the present invention relates to a production support apparatus, a method, and a program for providing production support to a system that produces products such as industrial products, for example.

### BACKGROUND

The automation of equipment has been promoted in a manufacturing industry that manufactures engineering products such as finished products and parts, for example. This trend is the same in production industries of other than engineering products, such as various foods, and in production industries of raising/cultivation of agricultural and aquatic products.

On the other hand, in recent years, for realization of a decarbonized society and early achievement of sustainable development goals (SDGs), reduction targets of carbon dioxide emission amount (CO2 emission amount) have been set for all production industries including manufacturing industries, and achievement of the reduction targets has been demanded. However, in current production systems, it is common to formulate a production plan based on a specification, a delivery date, and a price of a product and perform production (for example, refer to Patent Document 1 or 2). Therefore, in many current production systems, it is not possible to reflect the reduction of the CO2 emission amount on the production plan.

Therefore, in some manufacturers, in order to reflect the reduction of the CO2 emission amount in the production plan, the manufacturers themselves measure or estimate the CO2 emission amount by the production facility and reflect the result in the production plan.

### CITATION LIST

Patent Documents
Patent Document 1: Jpn. Pat. Appln. KOKAI Publication No. H8-88157
Patent Document 2: Jpn. Pat. Appln. KOKAI Publication No. H6-266413

### SUMMARY

### TECHNICAL PROBLEM

However, measuring or estimating the CO2 emission amount by the producers themselves is a heavy burden on them, which requires a lot of time and effort until the production plan is formulated and the production is started.

The present invention has been made in view of the above circumstances, and an object of the present invention is to provide a technology that enables producers to conduct production in consideration of reduction of CO2 emission amount while suppressing time and burden required for formulation of a production plan.

### SOLUTION TO PROBLEM

In order to address the above-mentioned problem, a first aspect of a production support apparatus or a production support method of the present invention is to acquire prediction information of an electric power charge and a CO2 emission amount per unit electric power amount of each date and time for each of a plurality of electric power supply sources assumed to be used, and acquire information for specifying a production condition of the product from a terminal of a production requester. First production plan information prioritizing reduction of a CO2 emission amount is generated based on the acquired electric power prediction information and information for specifying the production condition, and the generated first production plan information is output.

According to the first aspect of the present invention, the first production plan information prioritizing reduction of a CO2 emission amount is automatically generated and output by the production support apparatus. Therefore, for example, it is not necessary for a producer to formulate a production plan by independently measuring a CO2 emission amount when producing a product by the production facility and reflecting the CO2 emission amount. Accordingly, it is possible to conduct production in consideration of reduction of CO2 emission amount while reducing time required for formation of a production plan and suppressing operation burden.

A second aspect of this invention is to further generate, in addition to the first production plan information, at least one of second production plan information prioritizing a delivery date and third production plan information prioritizing a production cost, and to output the generated first production plan information and at least one of the second production plan information and the third production plan information.

According to the second aspect of the present invention, in addition to the first production plan information prioritizing reduction of a CO2 emission amount, at least one of second production plan information prioritizing a delivery date and third production plan information prioritizing a production cost is generated and output. Thus, for example, a production requester can request production by selecting the second production plan information or the third production plan information as necessary.

### ADVANTAGEOUS EFFECTS OF INVENTION

That is, according to each aspect of the present invention, it is possible to provide a technology that enables producers to conduct production in consideration of reduction of CO2 emission amount while suppressing the time and load required for formulation of a production plan.

### BRIEF DESCRIPTION OF THE DRAWINGS

FIG. 1 is a diagram illustrating an example of an overall configuration of a production management system including a production support apparatus according to an embodiment of the present invention.
FIG. 2 is a block diagram illustrating an example of a hardware configuration of a server apparatus having a function of the production support apparatus according to the embodiment of the present invention.
FIG. 3 is a block diagram illustrating an example of a software configuration of a server apparatus having a function of the production support apparatus according to the embodiment of the present invention.
FIG. 4 is a flowchart illustrating a processing procedure and a first half of processing contents of a production support process executed by the production support apparatus illustrated in FIGS. 2 and 3.
FIG. 5 is a flowchart illustrating a processing procedure and a second half of processing contents of a production support process executed by the production support apparatus illustrated in FIGS. 2 and 3.
FIG. 6 is a diagram illustrating an example of an electric power charge per unit amount of electric power and a CO2 emission amount of each date and time for each of a plurality of electric power supply sources assumed to use electric power.
FIG. 7 is a diagram illustrating an example of a production pattern that prioritizes reduction of a CO2 emission amount, which is generated by the production support apparatus illustrated in FIG. 3.
FIG. 8 is a diagram illustrating an example of production plan information corresponding to the production pattern illustrated in FIG. 7.
FIG. 9 is a diagram illustrating an example of a production pattern that prioritizes a delivery date, which is generated by the production support apparatus illustrated in FIG. 3.
FIG. 10 is a diagram illustrating an example of production plan information corresponding to the production pattern illustrated in FIG. 9.

### DETAILED DESCRIPTION

Hereinafter, embodiments according to the present invention will be described with reference to the drawings.

### [Embodiment]

### (Configuration Example)

### (1) System

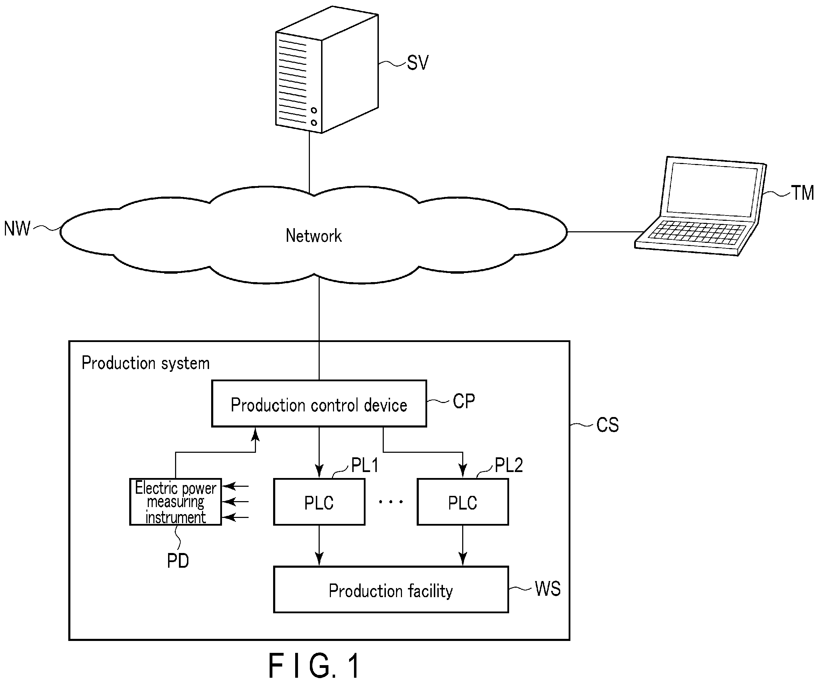

FIG. 1 is a diagram illustrating an example of an overall configuration of a production management system including a production support apparatus according to an embodiment of the present invention.

In the production management system according to the embodiment, a server apparatus SV having a function as a production support apparatus is connected to a production system CS operated by a producer via a network NW, and a terminal TM of a production requester can be connected to the server apparatus SV via the network NW.

The production system CS includes a production facility WS, a plurality of controllers (programmable logic controllers (PLCs)) PL1 and PL2, an electric power measuring instrument PD, and a production control device CP, for example. The production facility WS is formed of a puncher system that includes a work feeder and pluralities of conveyors and robots, for example.

The controllers PL1 and PL2 control the operations of the production facility WS according to a preset manufacturing logic. The electric power measuring instrument PD measures the electric power consumed by the production facility WS, and outputs measurement data including the measured electric power consumption amount and the measurement time to the production control device CP.

The production control device CP is formed of a personal computer, and manages and controls the operations of the entire production system CS, for example. For example, the production control device CP sets a control logic for production to the controllers PL1 and PL2 in accordance with production plan information sent from the server apparatus SV to be described later, and performs a process of selecting a supply source of electric power to be supplied to the production facility WS. The production control device CP also performs a process of acquiring the measurement data of the electric power consumption amount from the electric power measuring instrument PD during the operation period of the production facility WS and transmitting the acquired measurement data to the server apparatus SV in response to an acquisition request from the server apparatus SV.

The terminal TM of the production requester is formed of a personal computer, and is used by the production requester to transmit and receive various kinds of information data related to production requests, instructions, and the like to and from the server apparatus SV. For example, the terminal TM of the production requester transmits the production request information including the production condition of a product to the server apparatus SV. The terminal TM of the production requester also receives and displays candidates of the production plan information and the candidates of production plan change information transmitted from the server apparatus SV, and transmits selection information of the production plan and permission/non-permission information for a production plan change input by the production requester to the server apparatus SV.

The network NW includes a wide area network having the Internet as a core, for example, and an access network for accessing the wide area network. As the access network, a wired or wireless public communication network, a wired or wireless local area network (LAN), or a cable television (CATV) network is used, for example.

The production facility WS is not limited to the puncher system, and may also be a system for processing, painting, assembling, packaging, and the like of products or semi-products. Furthermore, the production facility WS is not limited to industrial products, and may be a system for growing and producing agricultural products, livestock products, or marine products. The configuration and the like of the production system SC are not limited to the above configuration.

### (2) Server apparatus SV

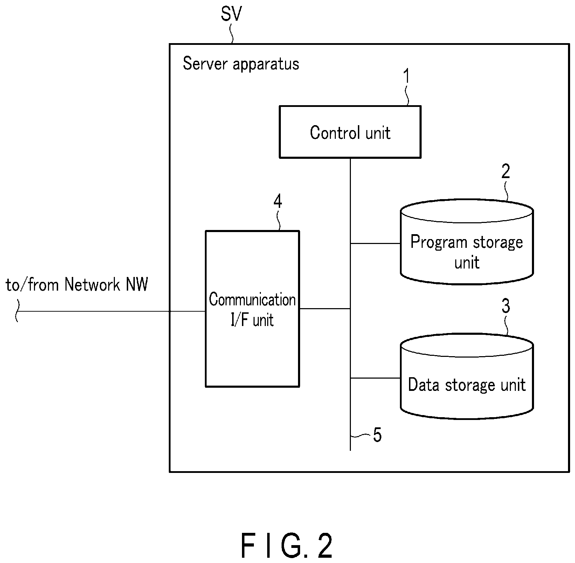

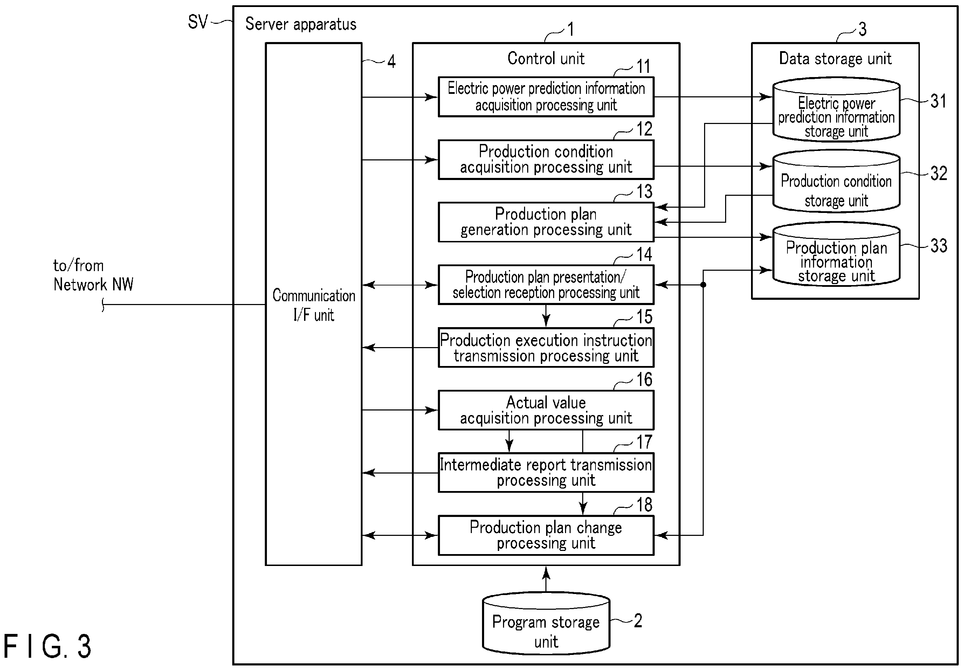

FIGS. 2 and 3 are block diagrams illustrating examples of hardware and software configurations of the server apparatus SV, respectively.

The server apparatus SV is formed of a server computer arranged on a cloud, an edge, or the web, for example. The server apparatus SV includes a control unit 1 that uses a hardware processor such as a central processing unit (CPU), and a storage unit that has a program storage unit 2 and a data storage unit 3 and a communication interface (hereinafter, the interface is referred to as an I/F) unit 4 are connected to the control unit 1 via a bus 5.

The communication I/F unit 4 transmits and receives information data to and from the production control device CP of the production system CS and the terminal TM of the production requester using a communication protocol defined by the network NW under the control of the control unit 1.

For example, the program storage unit 2 is formed by combining a non-volatile memory capable of writing and reading as needed, such as a hard disk drive (HDD) or a solid state drive (SSD), and a non-volatile memory such as a read only memory (ROM) as storage media, and stores an application program necessary for executing various control processes according to the embodiment of the present invention, in addition to middleware such as an operating system (OS).

The data storage unit 3 is a combination of a non-volatile memory that can be written and read as needed, such as an HDD or an SSD and a volatile memory, such as a random access memory (RAM), as storage media, for example, and includes an electric power prediction information storage unit 31, a production condition storage unit 32, and a production plan information storage unit 33 as storage areas according to the embodiment.

The electric power prediction information storage unit 31 is used to store electric power prediction information indicating prediction values of an electric power charge and a CO2 emission amount related to electric power to be supplied for each of a plurality of electric power supply sources (for example, equivalent to electric power companies) assumed to be used for a production operation in the production system CS in the future.

The production condition storage unit 32 is used to save the production request information sent from the terminal TM of the production requester at least until the end of the production.

The production plan information storage unit 33 is used to store the production plan information generated by the control unit 1 and its change information at least until the end of production.

The control unit 1 includes, as processing functions according to the embodiment of the present invention, an electric power prediction information acquisition processing unit 11, a production condition acquisition processing unit 12, a production plan generation processing unit 13, a production plan presentation/selection reception processing unit 14, a production execution instruction transmission processing unit 15, an actual value acquisition processing unit 16, an intermediate report transmission processing unit 17, and a production plan change processing unit 18. All of these processing units 11 to 18 are implemented by causing the hardware processor of the control unit 1 to execute the application programs stored in the program storage unit 2.

The electric power prediction information acquisition processing unit 11 acquires electric power profile information that indicates past electric power supply results from each of a plurality of electric power supply sources (for example, electric power companies) assumed to be used in the production system CS, for example. Then, the electric power prediction information acquisition processing unit 11 performs a process of predicting the electric power charge and the CO2 emission amount per unit electric power amount of each future date and time for each of the plurality of electric power supply sources, based on the acquired electric power profile information, and storing each prediction value in the electric power prediction information storage unit 31 as electric power prediction information.

The production condition acquisition processing unit 12 receives the production request information transmitted from the terminal TM of the production requester via the communication I/F unit 4, and performs a process of storing the received production request information in the production condition storage unit 32. The production request information includes identification information of a product to be produced, a production quantity, production conditions, and production requester attribute information including the name, contact information, and the like of the production requester. The production conditions include delivery date, cost, and target values of CO2 emission amount.

The production plan generation processing unit 13 generates candidates for the production plan information based on the production conditions stored in the production condition storage unit 32 and the electric power prediction information stored in the electric power prediction information storage unit 31 for the product to be produced designated by the production request information. Then, the production plan generation processing unit 13 performs a process of storing the generated candidates for the production plan information in the production plan information storage unit 33.

The candidates for the production plan information include first production plan information that prioritizes reduction of a CO2 emission amount, second production plan information that prioritizes a delivery date, and third production plan information that prioritizes a production cost. As the candidate for the production plan information, at least one of the first production plan information, the second production plan information, and the third production plan information may be generated. An example of the process of generating the production plan information will be described in relation to an operation example.

The production plan presentation/selection reception processing unit 14 performs a process of reading the candidates for the production plan information from the production plan information storage unit 33 and transmitting the read candidates for the production plan information from the communication I/F unit 4 to the terminal TM of the production requester.

The production plan presentation/selection reception processing unit 14 also receives selection information indicating the production plan information selected by the production requester among the generated candidates for the production plan information from the terminal TM via the communication I/F unit 4. Then, the production plan presentation/selection reception processing unit 14 performs a process of outputting the production plan information represented by the received selection information to the production execution instruction transmission processing unit 15.

The production execution instruction transmission processing unit 15 performs a process of transmitting the production plan information output from the production plan presentation/selection reception processing unit 14 to the production control device CP of the production system CS together with the production execution instruction.

The actual value acquisition processing unit 16 performs a process of acquiring actual values of the delivery date, the production cost, and the CO2 emission amount from the production control device CP periodically or at an arbitrary timing during a period in which the production operation of the product is executed in the production system CS.

The intermediate report transmission processing unit 17 performs a process of including the actual values of the delivery date, the production cost, and the CO2 emission amount acquired by the actual value acquisition processing unit 16 in the intermediate report information together with the target values of the delivery date, the production cost, and the CO2 emission amount designated as the production conditions by the production requester, and transmitting the intermediate report information from the communication I/F unit 4 to the terminal TM of the production requester.

The production plan change processing unit 18 performs a process of determining the degree of deviation of the actual values from the target values based on the actual values of the delivery date, the production cost, and the CO2 emission amount acquired by the actual value acquisition processing unit 16 and the target values of the delivery date, the production cost, and the CO2 emission amount designated as the production conditions, and changing the production plan to reduce the degree of deviation. An example of this change process will be described in relation to an operation example.

### (Operation Example)

Next, an operation example of the server apparatus SV configured as described above will be described.

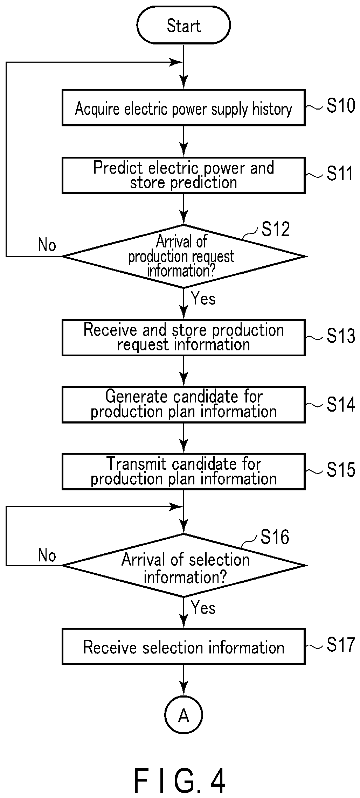

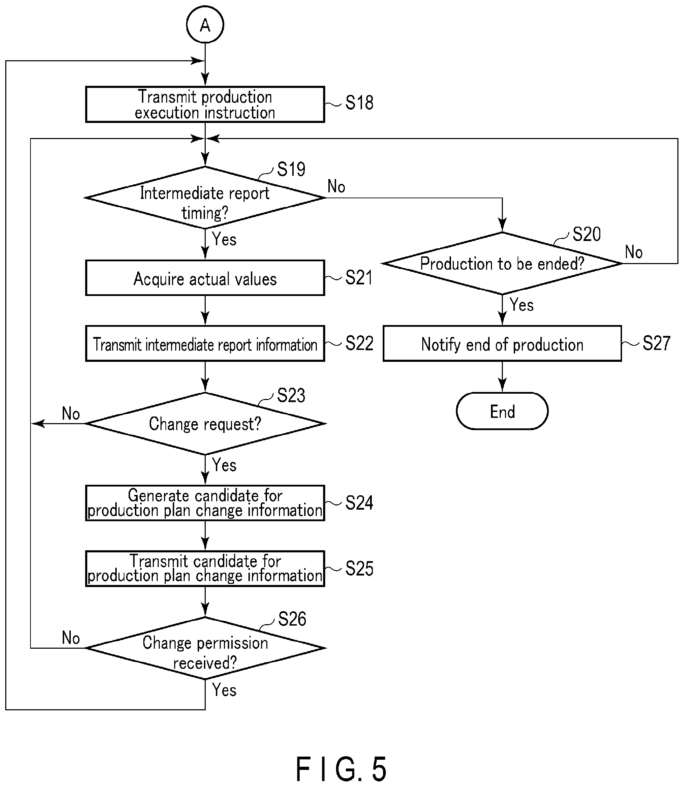

FIGS. 4 and 5 are flowcharts illustrating an example of a processing procedure and processing contents of the production support process executed by the control unit 1 of the server apparatus SV.

### (1) Prediction of information on electric power scheduled to be supplied

Under the control of the electric power prediction information acquisition processing unit 11, the control unit 1 of the server apparatus SV predicts an electric power charge and a CO2 emission amount related to electric power scheduled to be supplied in the future for each of a plurality of electric power supply sources assumed to be used in the production system CS periodically or at an arbitrary timing.

For example, first, in step S10, the electric power prediction information acquisition processing unit 11 acquires electric power profile information that indicates past electric power supply results from each of a plurality of electric power supply sources (for example, electric power companies) assumed to be used in the production system CS. In step S11, the electric power prediction information acquisition processing unit 11 predicts the electric power charge and the CO2 emission amount per unit electric power amount of each future date and time for each of the plurality of electric power supply sources, based on the acquired electric power profile information, and stores the prediction values in the electric power prediction information storage unit 31 as electric power prediction information.

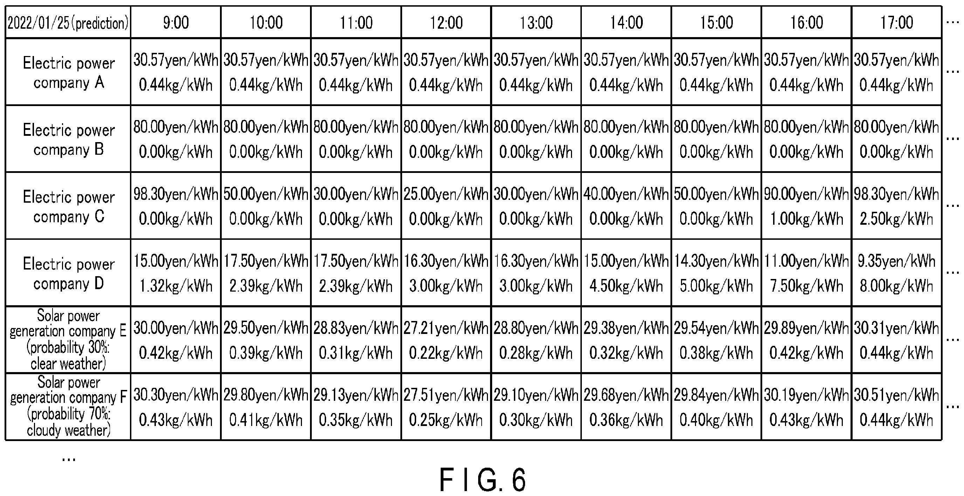

FIG. 6 illustrates an example of the electric power prediction information generated by the electric power prediction information acquisition processing unit 11. In this example, it is assumed that electric power company A, electric power company B, electric power company C, electric power company D, solar power generation company E (probability 30%: clear weather), and solar power generation company F (probability 70%: cloudy weather) is used as the electric power supply sources. As illustrated in FIG. 6, the electric power supplied by the electric power companies have different electric power charges and CO2 emission amounts per unit amount of electric power of each date and time in accordance with the electric power generation method.

### (2) Acquirement of production conditions

When requesting a producer to produce a product, a production requester generates production request information that includes identification information of the product to be produced, a production quantity, production conditions thereof, and production requester attribute information including the name, contact information, and the like of the production requester. As the production conditions, the target values of the delivery date, cost, and CO2 emission amount are designated. Then, the generated production request information is transmitted from the terminal TM to the server apparatus SV via the network NW.

On the other hand, the control unit 1 of the server apparatus SV monitors the arrival of the production request information from the terminal TM in step S12. When the production request information is transmitted from the terminal TM of the production requester in this state, the control unit 1 of the server apparatus SV receives the production request information via the communication I/F unit 4 and stores the received production request information in the production condition storage unit 32 in step S13 under the control of the production condition acquisition processing unit 12.

### (3) Generation of production plan information

When acquiring the production request information, the control unit 1 of the server apparatus SV generates the production plan information as described below in step S14 under the control of the production plan generation processing unit 13.

That is, the production plan generation processing unit 13 first reads the production conditions included in the production request information from the production condition storage unit 32. As described above, the production conditions include the target values of the delivery date, production cost, and CO2 emission amount.

The production plan generation processing unit 13 then generates a first production pattern that prioritizes the reduction of the CO2 emission amount, a second production pattern that prioritizes the delivery date, and a third production pattern that prioritizes the production cost with predetermined amounts of stepwise changes in weighting on the delivery date, the production cost, and the CO2 emission amount designated by the production conditions.

Subsequently, for each of the generated first, second, and third production patterns, the production plan generation processing unit 13 calculates and sets the optimum solution of a combination of the production start time, the production speed for each time slot, and the electric power supply source, based on the electric power prediction information stored in the electric power prediction information storage unit 31 and the information indicating the range of the production speed acquired in advance from the production system CS. The production plans reflecting the optimum solutions are set as first, second, and third production plan information.

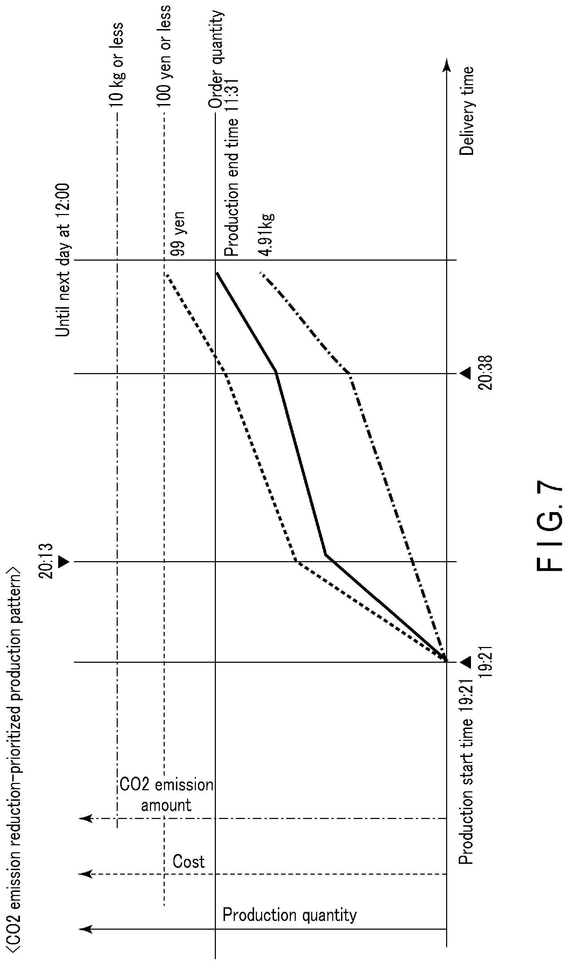

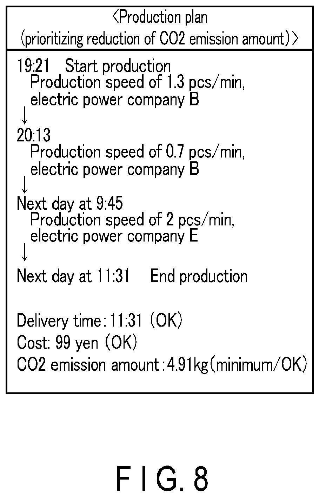

For example, it is assumed that the target values of the production conditions currently designated by the production requester are the delivery date (until the next day 12: 00), the production cost (100 yen or less), and the CO2 emission amount (10 kg or less). If the first production pattern that satisfies these target values and has the minimum CO2 emission amount is generated under the production conditions, a production pattern illustrated in FIG. 7 is generated, for example. According to the first production pattern, the production ends at 11:31 the next day, the production cost is 99 yen, and the CO2 emission amount is 4.91 kg. If the production speed and the optimum value of the electric power company are set to the first production pattern, the first production plan information is as illustrated in FIG. 8, for example.

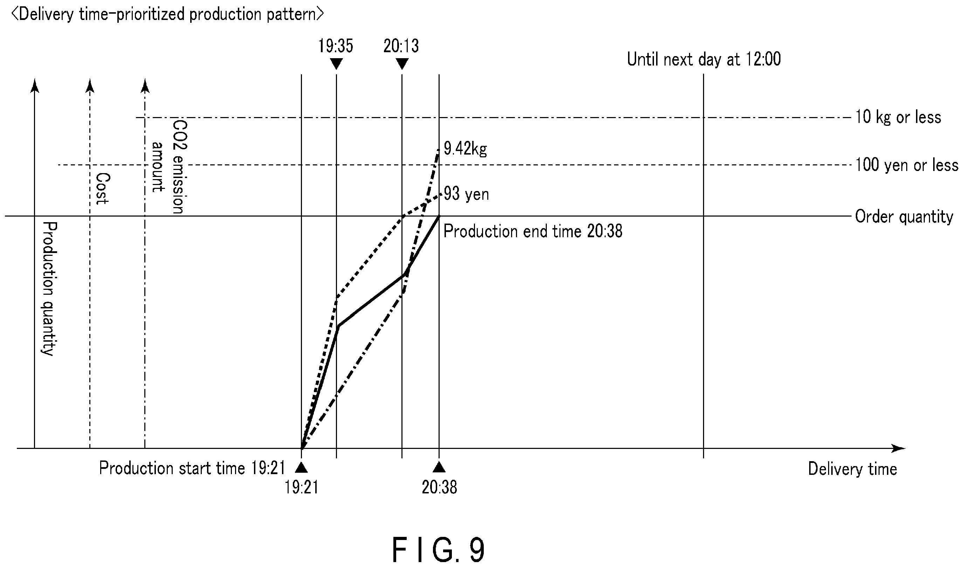

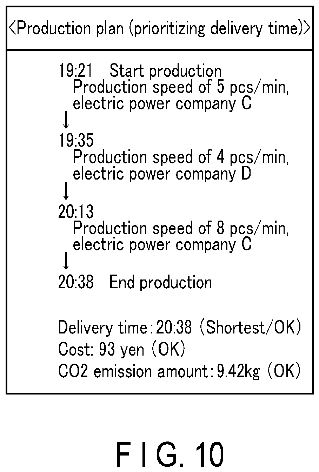

If the second production pattern that satisfies the target values of the delivery date (until the next day 12: 00), the production cost (100 yen or less), and the CO2 emission amount (10 kg or less) and has the shortest delivery date is generated under the above production conditions, a production pattern as illustrated in FIG. 9 is generated, for example. According to the second production pattern, the production cost is 93 yen, the CO2 emission amount is 9.42 kg, and the delivery time is the shortest, 20:38 minutes. If the production speed and the optimum value of the electric power company are set to the second production pattern, the second production plan information is as illustrated in FIG. 10, for example.

Similarly, the third production pattern that satisfies the target values of the delivery date (until 12:00 the next day), the production cost (100 yen or less), and the CO2 emission amount (10 kg or less) and that has the minimum production cost is generated under the production conditions, and the third production plan information corresponding to the third production pattern is generated.

When generating the production plan information, the production plan generation processing unit 13 determines whether the optimum solution of a combination of the production speed and the electric power supply source satisfies the target values designated by the production conditions. If it is determined that the optimum solution does not satisfy the target values, the production plan generation processing unit 13 adds an additional cost to the production cost. For example, if the target value of the CO2 emission amount is not satisfied or if the delivery date is not satisfied, a predetermined penalty is added to the production cost.

### (4) Presentation of candidates for production plan information and acquisition of selection information thereof

When the generation of the first, second, and third production plan information is completed, the control unit 1 of the server apparatus SV subsequently performs a process of presenting candidates for the production plan information to the production requester in step S15 under the control of the production plan presentation/selection reception processing unit 14.

For example, the production plan presentation/selection reception processing unit 14 reads the first, second, and third production plan information from the production plan information storage unit 33. The production plan presentation/selection reception processing unit 14 then transmits the read production plan information as candidates for the production plan from the communication I/F unit 4 to the terminal TM of the production requester. As a result, in the terminal TM of the production requester, the first, second, and third production plan information is displayed as candidates for the production plan on the display, for example.

In this state, it is assumed that the operator of the production requester selects and designates desired production plan information among the displayed pieces of production plan information on the terminal TM. Accordingly, the selection information of the production plan information is transmitted from the terminal TM to the server apparatus SV via the network NW.

On the other hand, the control unit 1 of the server apparatus SV monitors the transmission of the selection information from the terminal TM of the production requester in step S16 under the control of the production plan presentation/selection reception processing unit 14, and receives the selection information in step S17 when the selection information is transmitted.

### (5) Instruct for execution of production operation to production system CS

When receiving the selection information from the production requester, the control unit 1 of the server apparatus SV then transmits the production plan information designated by the received selection information to the production control device CP of the production system CS together with the production execution instruction in step S18 under the control of the production execution instruction transmission processing unit 15.

As a result, the production control device CP sets control logics for production to the controllers PL1 and PL2 according to the production plan information sent from the server apparatus SV, and selects a combination of electric power supply sources (for example, electric power companies) to supply electric power to the production facility WS. Thus, in the production facility WS, the production operation of the product designated as the production target is started according to the production pattern based on the production plan information.

For example, if the first production plan information prioritizing the reduction of the CO2 emission amount is given from the server apparatus SV, the production control device CP sets the production speed so as to minimize the CO2 emission amount, and selects a combination of electric power companies that has small CO2 emission amount, according to the first production plan information. Therefore, in the production facility WS, the production operation of the product is performed so that the CO2 emission amount is minimized according to the production pattern based on the first production plan information.

If the second production plan information prioritizing the delivery date is given from the server apparatus SV, the production control device CP sets the production speed to be high so as to minimize the delivery date, and selects a combination of electric power companies corresponding to the production speed, according to the second production plan information. Therefore, in the production facility WS, the production operation of the product is performed according to the production pattern based on the second production plan information so as to maximize the delivery date.

Similarly, if the third production plan information prioritizing the delivery date is given from the server apparatus SV, the production control device CP sets the production speed so as to minimize the production cost, and selects a combination of electric power companies with inexpensive electric power charges according to the third production plan information. As a result, in the production facility WS, the production operation of the product is performed so that the production cost is minimized according to the production pattern based on the second production plan information.

### (6) Intermediate report during production operation

When the production operation is started, in the production system CS, the electric power consumption amount in the production facility WS and the controllers PL1 and PL2 is measured in time series by the electric power measuring instrument PD during the production operation, and is notified to the production control device CP. In this case, the notified electric power consumption includes the electric power consumption of the production control device CP itself. The production control device CP calculates the production cost by adding various fixed costs necessary for production to the electric power charge corresponding to the electric power consumption. Along with this, the production control device CP acquires the production quantity of the product from the controllers PL1 and PL2, and further acquires or calculates the CO2 emission amount from the production start time to the present time from the electric power company from which electric power is supplied.

On the other hand, during the production operation by the production system CS, the control unit 1 of the server apparatus SV monitors whether it is the intermediate report timing in step S19 under the control of the actual value acquisition processing unit 16 while monitoring the end of the production operation in step S20. Then, when the intermediate report timing has come in this state, the actual value acquisition processing unit 16 transmits an acquisition request for the intermediate actual values to the production control device CP in step S21.

Upon receipt of the acquisition request, the production control device CP transmits the intermediate actual values of the production quantity, the production cost, and the CO2 emission amount at this point of time to the server apparatus SV. The actual value acquisition processing unit 16 of the server apparatus SV receives the actual values of the production quantity, the production cost, and the CO2 emission amount transmitted from the production control device CP via the communication I/F unit 4.

Upon reception of the intermediate actual values, the control unit 1 of the server apparatus SV generates the intermediate report information by associating the received intermediate actual values of the production quantity, the production cost, and the CO2 emission amount with the respective target values of the delivery date, the production cost, and the CO2 emission amount designated in advance as the production conditions by the production requester, in step S22 under the control of the intermediate report transmission processing unit 17. Then, the control unit 1 of the server apparatus SV transmits the generated intermediate report information from the communication I/F unit 4 to the terminal TM of the production requester.

When generating the intermediate report information, the intermediate report transmission processing unit 17 may predict the final delivery date, production cost, and CO2 emission amount at the end of the production operation, based on the intermediate actual values of the production quantity, the production cost, and the CO2 emission amount, and include the prediction values in the intermediate report information together with the target values specified as the production conditions.

The intermediate report transmission processing unit 17 may also calculate intermediate target values of the production quantity, the production cost, and the CO2 emission amount at the point of time of intermediate report from the target values of the delivery date, the production cost, and the CO2 emission amount designated as the production conditions, and include the calculated intermediate target values in the intermediate report information together with the intermediate actual values of the production quantity, the production cost, and the CO2 emission amount.

Besides, the intermediate report transmission processing unit 17 may include only the intermediate actual values of the production quantity, the production cost, and the CO2 emission amount in the intermediate report information.

The intermediate report information is received by the terminal TM of the production requester and displayed on a display, for example. Therefore, the production requester can check the progress status of the production during the production operation. Then, if the production requester determines that it is necessary to change the production plan in order to achieve the target values as a result of checking the progress status, the production requester can transmit a request for changing the production plan from the terminal TM to the server apparatus SV.

### (7) Change of production plan

During the production operation, the control unit 1 of the server apparatus SV executes a process of changing the production plan as described below, under the control of the production plan change processing unit 18.

That is, in step S23, the production plan change processing unit 18 monitors a request for changing the production plan from the terminal TM of the production requester. In this state, upon receipt of the request for changing the production plan, the production plan change processing unit 18 generates a candidate for the production plan change information in step S24.

For example, the production plan change processing unit 18 first predicts the final delivery date, production cost, and CO2 emission amount after the end of production from the intermediate actual values of the production quantity, the production cost, and the CO2 emission amount acquired by the actual value acquisition processing unit 16. The production plan change processing unit 18 then determines the degree of deviation of the prediction values of the delivery date, the production cost, and the CO2 emission amount from the target values of the delivery date, the production cost, and the CO2 emission amount designated by the production condition sent from the production requester. Specifically, the production plan change processing unit 18 calculates the difference value as the degree of deviation. The production plan change processing unit 18 then generates candidates for the production plan change information for reducing the calculated difference value. Next, in step S25, the production plan change processing unit 18 transmits the generated candidates for the production plan change information from the communication I/F unit 4 to the terminal TM of the production requester.

As a result, in the terminal TM of the production requester, the candidate for the production plan change information is displayed on the display, for example. The production requester inputs, to the terminal TM as response information, whether to accept or reject the change content of the displayed candidate for the production plan change information. The terminal TM transmits the input response information to the server apparatus SV via the network NW.

On the other hand, the control unit 1 of the server apparatus SV monitors the arrival of the response information in step S26 under the production plan change processing unit 18. Then, when the response information is received and it indicates permission for the change, the production plan change processing unit 18 updates the production plan information stored in the production plan information storage unit 33. Along with this, the production plan change processing unit 18 returns to step S18 and transmits the permitted production plan change information together with a production plan change instruction to the production control device CP of the production system CS.

As a result, in accordance with the production plan change information sent from the server apparatus SV, the production control device CP of the production system CS instructs the controllers PL1 and PL2 to change the control logic for production and change the combination of electric power supply sources (for example, electric power companies). Thus, in the production facility WS, the production pattern is changed in the middle of the production operation according to the production pattern corresponding to the changed production plan information.

Therefore, for example, if it is predicted that the final CO2 emission amount estimated from the actual value of the CO2 emission amount exceeds the target value of the CO2 emission amount designated as the production condition, in the production system CS, the production pattern is changed to a production pattern prioritizing the reduction of the CO2 emission amount in the middle of the production operation based on the production plan change information sent from the server apparatus SV. As a result, the electric power supply source is switched to an electric power company with a small CO2 emission amount, for example, whereby the final CO2 emission amount can be suppressed to be less than the target value.

However, it is expected that switching to an electric power company with a small CO2 emission amount will lead to increase in the electric power charge and increase in the production cost, for example. However, the increase in production cost is described in advance in the production plan change information. This allows the production requester to determine whether to permit the change of the production plan after ascertaining the disadvantage of increasing the production cost as well as the advantage of suppressing the CO2 emission amount to less than the target value.

In addition, if it is predicted that the delivery date is not within the target value designated by the production condition, in the production system CS, the production pattern is changed in the middle of the production operation based on the production plan change information sent from the server apparatus SV, and thus, the production speed of the production facility WS is increased, for example. This makes it possible to meet the production delivery date.

However, it is expected that increasing the production speed will lead to increase on the electric power consumption and increase in the production cost, for example. At the same time, it is also expected that increasing the production speed will cause an increase in CO2 emission amount. However, the increase in the production cost and the increase in the CO2 emission amount are described in advance in the production plan change information. Therefore, the production requester can determine whether to permit the change of the production plan after ascertaining the disadvantages of the increase in the production cost and the increase in the CO2 emission amount as well as the advantage of preventing a delay in delivery.

Similarly, if it is expected that the production cost exceeds the target value designated by the production condition, in the production system CS, the production pattern in the production facility WS is changed in the middle of the production operation based on the production plan change information sent from the server apparatus SV, and thus, switching to an electric power company with a low electric power charge is performed, for example. This suppresses the production cost to be less than the target value.

However, it is expected that switching to an electric power company with inexpensive electric power charges will lead to an increase in CO2 emission amount. However, the increase in the CO2 emission amount is described in the production plan change information. This allows the production requester to determine whether to permit the change of the production plan after ascertaining the disadvantage of increasing the CO2 emission amount as well as the advantage of suppressing the production cost.

### (8) Processing after end of production

When the production operation based on the production plan information or the change information is ended in the production facility WS and the end of production is transmitted from the production control device CP, the control unit 1 of the server apparatus SV receives the end of production in step S20.

Then, the control unit 1 of the server apparatus SV generates a production end notification in step S28, and transmits the generated production end notification from the communication I/F unit 4 to the terminal TM of the production requester. The production end notification includes the final results of the delivery date, the production cost, and the CO2 emission amount after the end of the production acquired from the production control device CP, together with the target values of the delivery date, the production cost, and the CO2 emission amount specified as the production conditions by the production requester, for example. The production end notification may include only the final results of the delivery date, the production cost, and the CO2 emission amount after the end of the production.

### (Advantageous Effects)

As described above, in one embodiment, the following processing is performed in the server apparatus SV having the function as a production support apparatus.

That is, for each of the plurality of electric power companies assumed to be used in the production system CS, the electric power charge and the CO2 emission amount per unit electric power amount of each date and time are predicted, and the prediction results are stored as the electric power prediction information. Then, when production conditions designating the target values of the delivery date, the production cost, and the CO2 emission amount are received from the terminal TM of the production requester, three types of production plan information are generated based on the electric power prediction information and the information indicating the range of the production speed of the production facility. The three types of production plan information are first production plan information that satisfies the target values designated by the production conditions and has the minimum CO2 emission amount, second production plan information that satisfies the target values and has the shortest delivery date, and third production plan information that satisfies the target values and has the minimum production cost. Next, these types of generated production plan information are transmitted to the terminal TM of the production requester. Then, the production plan information selected and designated by the production requester among these types of production plan information is sent to the production system CS, and the process of executing the production operation is performed in the production facility WS according to the production pattern indicated by the production plan information.

Therefore, according to the embodiment, it is not necessary for both the production requester and the producer to generate the production plan information by themselves, and thus, it is possible to cause the production system CS to start the production operation according to the production plan suitable for their desire with a small work load in a short time. In particular, if the main purpose is to achieve the target value of the CO2 emission amount, the production requester can cause the production system CS to perform the production operation focusing on the reduction of the CO2 emission amount only by selecting the first production plan information that prioritizes the reduction of the CO2 emission amount, which is presented from the server apparatus SV. On the other hand, if the production prioritizing the delivery date or the production cost is desired, the production requester can cause the production system CS to perform the production operation focusing on the delivery date or the production cost only by selecting the second or third production plan information.

In addition, in the embodiment, the server apparatus SV acquires the actual values of the production quantity, the production cost, and the CO2 emission amount during the production operation from the production system CS, includes the intermediate actual values or the final prediction values of the delivery date, the production cost, and the CO2 emission amount calculated from the intermediate actual values in the intermediate report information, and transmits the intermediate report information to the terminal TM of the production requester. Therefore, during the production operation of the production system CS, the production requester can check the interim states of the production quantity, the production cost, and the CO2 emission amount or the final prediction values based on the intermediate report information, and can request an intermediate change of the production plan as necessary.

Furthermore, in the embodiment, upon receipt of a request for an intermediate change of the production plan from the production requester, the server apparatus SV obtains a difference value between the target values of the delivery date, the production cost, and the CO2 emission amount designated by the production conditions and the final prediction values calculated from the intermediate actual values of the production quantity, the production cost, and the CO2 emission amount, and generates production plan change information for reducing the difference value. Then, the generated production plan change information is transmitted to the terminal TM of the production requester, and the production plan of the production system CS is changed partway with permission of the production requester.

Therefore, it is possible to appropriately change the production plan according to the actual situation of the production operation in the production system CS, and thus, it is possible to achieve the initially designated target values of the delivery date, the production cost, and the CO2 emission amount.

### [Other Embodiments]

(1) In the embodiment described above, as an example, the server apparatus SV acquires the electric power profile information from a plurality of electric power supply sources (for example, electric power companies) assumed to be used in the production system CS, and predicts the electric power charge and the CO2 emission amount related to the electric power to be supplied from each electric power company based on the electric power profile information. However, the present invention is not limited thereto, and for example, if each electric power company holds electric power supply schedule information indicating the electric power charge and the CO2 emission amount related to the electric power to be supplied, the server apparatus SV may acquire the electric power supply schedule information from each electric power company without performing the electric power prediction process.
(2) In the embodiment described above, the server apparatus SV generates the first production plan information prioritizing the reduction of the CO2 emission amount, the second production plan information prioritizing the delivery date, and the third production plan information prioritizing the production cost, and presents the same to the production requester as candidates for the production plan information. However, the present invention is not limited thereto, and the server apparatus SV may generate only the first production plan information and present the same to the production requester, or may generate the first production plan information and only one of the second and third production plan information and present the same to the production requester.
(3) In the embodiment described above, as an example, the server apparatus SV presents the generated first and second or third production plan information to the production requester, and issues an execution instruction of the production operation to the production system CS according to the production plan information selected and designated by the production requester. However, the present invention is not limited thereto, and for example, the server apparatus SV may directly transmit the production plan information to the production system CS to execute the production operation without the selection designation process being performed by the production requester.
(4) In the embodiment described above, as an example, upon receipt of a request for an intermediate change of the production plan from the terminal TM of the production requester, the server apparatus SV generates the production plan change information and transmits the same to the terminal TM of the production requester. However, the present invention is not limited thereto, and the server apparatus SV may determine whether it is necessary to change the production plan based on a difference between the intermediate actual value acquired from the production system CS and the target value designated by the production condition, for example, and generate the production plan change information and transmit the same to the terminal TM of the production requester if the server apparatus SV determines that it is necessary to change the production plan.
(5) In the embodiment described above, as an example, the processing functions of the production support apparatus are provided in the server apparatus SV on the cloud, the edge, or the web. However, the processing functions of the production support apparatus may be provided in the production control device CP in the production system CS. In addition, the processing functions of the production support apparatus may be distributed among a plurality of server apparatuses or personal computers.
(6) The processing procedures and processing contents performed by the processing functions of the production support apparatus, a configuration and processing functions of the production system, the types of products or production operations, the processing functions of the terminal of the production requester, and the like can be modified and implemented in various manners without departing from the gist of the present invention.

Although the embodiments of the present invention have been described in detail above, the above description is of merely examples of the present invention in all respects. It goes without saying that various improvements and modifications can be made without departing from the scope of the present invention. That is, in carrying out the present invention, a specific configuration according to the embodiment may be adopted as appropriate.

In short, the present invention is not limited to the above embodiments as they are, and in the implementation stage, the components can be embodied in modified manners without departing from the scope of the present invention. In addition, various inventions can be formed by appropriately combining the plurality of components disclosed in the above embodiments. For example, some components may be removed from all the components illustrated in the embodiments. Further, components from different embodiments may be combined as appropriate.

### REFERENCE SIGNS LIST

- SV: Server apparatus
- TM: Terminal of production requester
- CS: Production system
- CP: Production control device
- PL1, PL2: Controller
- PD: Electric power measuring instrument
- WS: Production facility
- NW: Network
- 1: Control unit
- 2: Program storage unit
- 3: Data storage unit
- 4: Communication I/F unit
- 5: Bus
- 11: Electric power prediction information acquisition processing unit
- 12: Production condition acquisition processing unit
- 13: Production plan generation processing unit
- 14: Production plan presentation/selection reception processing unit
- 15: Production execution instruction transmission processing unit
- 16: Actual value acquisition processing unit
- 17: Intermediate report transmission processing unit
- 18: Production plan change processing unit
- 31: Electric power prediction information storage unit
- 32: Production condition storage unit
- 33: Production plan information storage unit

## Claims

1. A production support apparatus that supports a production operation of a product by a production facility, the production support apparatus comprising:
a first processing unit configured to acquire prediction information of an electric power charge and a CO2 emission amount per unit electric power amount of each date and time for each of a plurality of electric power supply sources assumed to be used for the production operation;
a second processing unit configured to acquire information for specifying a production condition of the product from a terminal of a production requester;
a third processing unit configured to generate at least first production plan information prioritizing reduction of a CO2 emission amount, based on the acquired prediction information and information for specifying the production condition; and
a fourth processing unit configured to output the generated first production plan information.

2. The production support apparatus according to claim 1, wherein
the third processing unit further generates, in addition to the first production plan information, at least one of second production plan information prioritizing a delivery date and third production plan information prioritizing a production cost, and
the fourth processing unit outputs the first production plan information and at least generated one of the second production plan information and the third production plan information.

3. The production support apparatus according to claim 1, wherein the first processing unit predicts an electric power charge and a CO2 emission amount per unit electric power amount of each date and time for each of the plurality of electric power supply sources based on information indicating past electric power supply results of the plurality of electric power supply sources, and uses a prediction result as the prediction information.

4. The production support apparatus according to claim 2, wherein
the third processing unit executes:
generating at least one of a first production pattern prioritizing reduction of CO2 emission amount, a second production pattern prioritizing a delivery date, and a third production pattern prioritizing a production cost by changing weights to respective target values of the delivery date, the production cost, and the CO2 emission amount included in the information for designating the production condition; and
generating the first production plan information and at least one of the second production plan information and the third production plan information by applying an optimum solution of the electric power supply source and a production speed of the production facility to the generated first production pattern and at least generated one of the second production pattern and the third production pattern, based on the prediction information and the information indicating the production speed.

5. The production support apparatus according to claim 4, wherein the third processing unit determines whether the optimum solution satisfies the target values of the delivery date, the production cost, and the CO2 emission amount included in the information for designating the production condition, and performs a process of adding an additional cost to the production cost when the third processing unit determines that the optimum solution does not satisfy the target values.

6. The production support apparatus according to claim 2, further comprising a fifth processing unit configured to acquire, from the terminal of the production requester, selection information indicating production plan information selected by the production requester from among the first production plan information and at least one of the second production plan information and the third production plan information.

7. The production support apparatus according to claim 2, further comprising a sixth processing unit configured to acquire actual values of the delivery date, the production cost, and the CO2 emission amount during a period in which the production operation is performed, and output intermediate report information including the acquired actual values to the terminal of the production requester.

8. The production support apparatus according to claim 2, further comprising a seventh processing unit configured to acquire actual values of the delivery date, the production cost, and the CO2 emission amount during a period in which the production operation is performed, calculate a degree of deviation of the acquired actual values from the target values of the delivery date, the production cost, and the CO2 emission amount included in the information for designating the production condition, and generate production plan change information for reducing the calculated degree of deviation.

9. A production support method by which an information processing apparatus supports a production operation of a product by a production facility, the production support method comprising:
acquiring prediction information of an electric power charge and a CO2 emission amount per unit electric power amount of each date and time for each of a plurality of electric power supply sources assumed to be used for the production operation;
acquiring information for specifying a production condition of the product from a terminal of a production requester;
generating at least first production plan information prioritizing reduction of a CO2 emission amount, based on the acquired prediction information and information for specifying the production condition; and
outputting the generated first production plan information.

10. The production support method according to claim 9, wherein
in the generating at least first production plan information, in addition to the first production plan information, at least one of second production plan information prioritizing a delivery date and third production plan information prioritizing a production cost are further generated, and
in the outputting, the first production plan information and at leastgenerated one of the second production plan information and the third production plan information are output.

11. A program for causing a processor included in the production support apparatus according to any one of claims 1 to 8 to execute at least one of the processes by the first processing unit to the seventh processing unit included in the production support apparatus.
